# FASCICULE DE BREVET EUROPEEN

(11) **EP 3 754 779 B1**
(45) Date de publication et mention de la délivrance du brevet: **13.09.2023**
(21) Numéro de dépôt: 20178255.4
(22) Date de dépôt: 04.06.2020
(51) Int. Cl.: H01P 1/04

(54) **DISPOSITIF D'ASSEMBLAGE DE DEUX GUIDES D'ONDES**
VORRICHTUNG ZUM ZUSAMMENBAU VON ZWEI WELLENLEITERN
DEVICE FOR ASSEMBLING TWO WAVEGUIDES

(30) Priorité: 20.06.2019 FR 1906651
(43) Date de publication de la demande: 23.12.2020
(73) Titulaire: THALES, 92400 Courbevoie (FR); Bal Seal Engineering, LLC, Foothill Ranch, CA 92610 (US)
(72) Inventeur: VENDIER, Olivier, 31320 Aureville (FR); BREVART, Bertrand, 31390 Carbonne (FR); FOUCTIERE, Gilbert, 31037 Toulouse Cedex 1 (FR); FORESTIER, Stéphane, 31320 Pechabou (FR); DUPUY, Didier, 31037 Toulouse Cedex 1 (FR); GRANT, Brandon, Irvine, CA 92620 (US)
(74) Mandataire: Atout PI Laplace

(56) Documents cités:
- US-A- 3 575 675
- US-A- 5 082 390
- US-A- 5 926 943
- US-A1- 2009 149 053
- US-B2- 9 267 526

## Description

La présente invention se rapporte à un dispositif d'assemblage permettant d'assembler deux guides d'ondes. L'invention s'applique au domaine des satellites et des équipements spatiaux, mais peut également trouver application pour des produits au sol.

Un guide d'onde creux est généralement composé de portions rectilignes, mais pouvant être plus généralement de forme quelconque, qui doivent être connectées entre elles ou à un équipement. Par exemple, dans le domaine spatial, un guide d'ondes creux peut être connecté à un équipement de charge utile d'un satellite pour assurer les liaisons RF. Les guides d'ondes permettent de propager des fréquences élevées jusqu'à 50 GHz, avec de faibles pertes et une bonne adaptation aux interfaces, et une forte efficacité de blindage (on parle de compatibilité électromagnétique, aussi connue sous l'abréviation EMC de son acronyme anglo-saxon ElectroMagnetic Compatibility).

L'invention s'applique aux guides d'ondes creux servant à guider et à confiner, dans un creux du guide d'ondes défini par des parois du guide d'ondes, des ondes électromagnétiques ou acoustiques, par réflexion multiples des ondes sur le guide d'ondes. L'invention s'applique plus particulièrement aux guides d'ondes servant au guidage des ondes radiofréquences. Autrement dit, les guides d'ondes sont destinés à être reliés entre eux par l'intermédiaire de leurs extrémités respectives adjacentes. Les guides d'ondes sont placés côte à côte de sorte que les extrémités soient contigües. L'invention s'applique à des guides d'ondes qui peuvent être de section rectangulaire, elliptique ou circulaire.

Généralement, les extrémités des guides d'ondes sont munies de brides. Les brides comprennent classiquement des trous en vis-à-vis. Les guides d'ondes sont alors assemblés par des systèmes de type vis-écrou pénétrant dans ces trous en vis-à-vis. De quatre à dix vis sont généralement prévues pour assembler les guides d'ondes et les maintenir alignés. Sur les charges utiles à forte complexité de type multi-spot, mais aussi VHTS standard (abréviation de l'acronyme anglo-saxon Very High Throughput Satellite, satellite très haut débit), des milliers de guides d'ondes sont à assembler. Cela représente par exemple plus de 60000 vis sur un VHTS. Or, outre le temps passé pour le montage, les vis et rondelles représentent un coût très important.

Des solutions existantes proposent des systèmes de clip de maintien sur les brides existantes. De telles solutions ne sont pas complètement satisfaisantes pour des problèmes de masse et d'accessibilité de l'assemblage. D'autres solutions par soudage ou collage des brides posent un problème de démontabilité et de mise en oeuvre complexe.

Les brevets US7955145, US9267526, US7722415, US8167285, US9534625, US3575675 divulguent des solutions de connexion de deux membres allongés mais ne concernent pas les guides d'ondes soumis à des contraintes additionnelles de performance RF et d'isolation EMC.

L'invention vise à pallier tout ou partie des problèmes cités plus haut en proposant un assemblage de deux guides d'ondes sans utiliser de vis capable d'assurer la performance RF, EMC et mécanique et répondant aux contraintes de tenue à l'environnement vibratoire et choc, démontabilité et accessibilité.

A cet effet, l'invention a pour objet un assemblage comprenant un premier guide d'ondes et un deuxième guide d'ondes s'étendant longitudinalement selon un premier axe, ayant chacun une extrémité comprenant chacune une première gorge annulaire, les deux extrémités étant contigües selon le premier axe Z, et un dispositif d'assemblage du premier guide d'ondes et du deuxième guide d'ondes, dans lequel le dispositif d'assemblage comprend :
- un fourreau entourant les extrémités des premier et deuxième guides d'ondes, ayant une paroi intérieure comprenant deux premières gorges annulaires en vis-à-vis des premières gorges annulaires des premier et deuxième guides d'ondes,
- deux éléments réversiblement déformables, chacun étant positionné dans une première gorge annulaire du fourreau et positionné dans une première gorge annulaire des premier et deuxième guides d'ondes, de sorte à bloquer en translation selon le premier axe les premier et deuxième guides d'ondes.

Selon un mode de réalisation de l'invention, les extrémités des premier et deuxième guides d'ondes sont de section elliptique.

Selon un autre mode de réalisation de l'invention, les extrémités des premier et deuxième guides d'ondes sont de section circulaire.

Avantageusement, le au moins un élément réversiblement déformable est un ressort à spires inclinées, de sorte à exercer une pression prédéfinie entre les premier et deuxième guides d'ondes entre eux.

Avantageusement, au moins une des deux extrémités comprenant en outre au moins une deuxième gorge annulaire, la paroi intérieure du fourreau comprend au moins une deuxième gorge annulaire en vis-à-vis de la au moins une deuxième gorge annulaire des premier et deuxième guides d'ondes, et au moins un deuxième élément réversiblement déformable positionné dans la au moins une deuxième gorge annulaire du fourreau et positionné dans une deuxième gorge annulaire des premier et/ou deuxième guides d'ondes.

L'invention concerne aussi un satellite comprenant au moins un tel assemblage.

L'invention sera mieux comprise et d'autres avantages apparaîtront à la lecture de la description détaillée d'un mode de réalisation donné à titre d'exemple, description illustrée par le dessin joint dans lequel :
La figure 1 représente un guide d'ondes, apte à être assemblé à l'aide du dispositif d'assemblage selon l'invention ;
La figure 2 représente un premier mode de réalisation du dispositif d'assemblage selon l'invention ;
La figure 3 représente le premier mode de réalisation de l'assemblage selon l'invention avec les deux éléments assemblés;
La figure 4 représente l'assemblage selon l'invention;
La figure 5 représente partiellement le dispositif d'assemblage selon l'invention, avant assemblage des guides d'ondes ;
La figure 6 représente partiellement le dispositif d'assemblage selon l'invention, les guides d'ondes assemblés;
La figure 7 représente une vue en coupe perpendiculairement à l'axe Z au niveau des gorges du dispositif d'assemblage en conception symétrique selon l'invention, les guides d'ondes assemblés;
La figure 8 représente une vue en coupe perpendiculairement à l'axe Z au niveau des gorges du dispositif d'assemblage en conception asymétrique selon l'invention, les guides d'ondes assemblés;
La figure 9 représente un satellite équipé d'au moins un dispositif d'assemblage selon l'invention.

Par souci de clarté, les mêmes éléments porteront les mêmes repères dans les différentes figures.

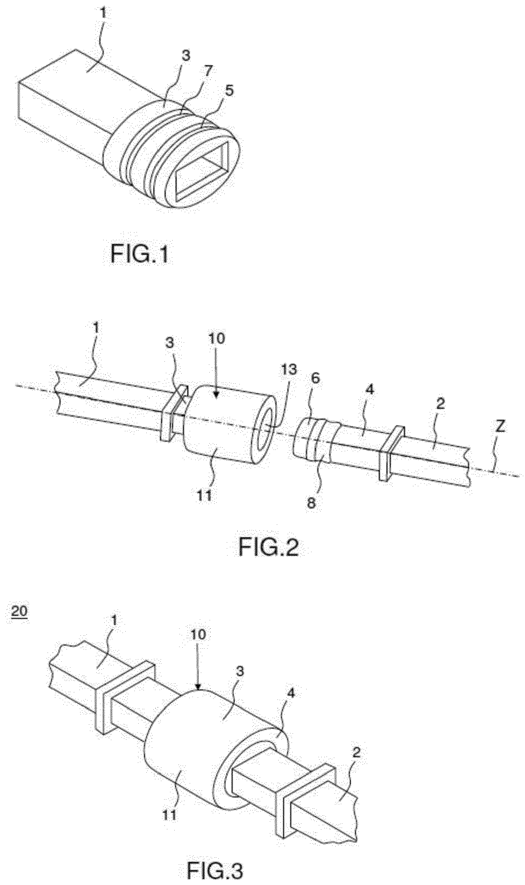

La figure 1 représente un premier guide d'ondes 1 apte à être assemblé à l'aide du dispositif d'assemblage selon l'invention. Le premier élément 1 s'étend longitudinalement selon un premier axe Z et a une extrémité 3. L'extrémité 3 du premier guide d'ondes 1 comprend une première gorge annulaire 5. Il peut comprendre une deuxième gorge annulaire 7.

Le premier guide d'ondes 1 représenté sur la figure 1 a deux gorges annulaires 5 et 7 en son extrémité 3. Il doit en avoir au minimum une, préférentiellement il en a deux, mais il peut également en avoir plus que 2.

La figure 2 représente un premier mode de réalisation du dispositif d'assemblage 10 selon l'invention. Sur la figure 2 sont représentés le premier guide d'ondes 1 décrit précédemment à la figure 1 et un deuxième guide d'ondes 2 s'étendant lui aussi longitudinalement selon le premier axe Z, et ayant une extrémité 4 comprenant une première gorge annulaire 6. Tout comme le premier guide d'ondes 1, le deuxième guide d'ondes a deux gorges annulaires 6 et 8 en son extrémité 4. Il doit en avoir au minimum une, préférentiellement il en a deux, mais il peut également en avoir plus que 2. Les gorges annulaires représentées s'étendent annulairement (autour des extrémités 3, 4 pour les gorges 5, 6, 7, 8 et à l'intérieur de la paroi intérieure 12 du fourreau 11 pour les gorges 13) dans un plan sensiblement perpendiculaire au premier axe Z. Toutefois, l'invention s'applique similairement pour des gorges s'étendant annulairement dans un plan sécant au premier axe Z, non obligatoirement perpendiculaire au premier axe Z.

Afin d'assembler les premier et deuxième guides d'ondes 1, 2, les deux extrémités 3, 4 sont contigües selon le premier axe Z, comme visible sur la figure 2.

Selon l'invention, le dispositif d'assemblage 10 comprend un fourreau 11 entourant les extrémités 3, 4 des premier et deuxième guide d'ondes 1, 2. Le fourreau a une paroi intérieure 12 comprenant deux premières gorges 13 annulaires destinées à être, en position assemblée, en vis-à-vis des premières gorges annulaires 5, 6 des premier et deuxième guides d'ondes 1, 2. Le dispositif d'assemblage 10 comprend deux éléments réversiblement déformables 14, chacun étant positionné dans une première gorge 13 annulaire du fourreau 11 et configuré pour être positionné dans une première gorge annulaire 5, 6 des premier et deuxième guides d'ondes 1, 2, de sorte à bloquer en translation selon le premier axe Z les premier et deuxième éléments.

Autrement dit, les deux éléments réversiblement déformables 14 sont configurés pour coopérer avec les premières gorges 5, 6 des premier et deuxième guide d'ondes 1, 2 et avec les premières gorges 13 du fourreau 11 qui enveloppe les deux extrémités 3, 4 des premier et deuxième guide d'ondes 1, 2.

Pour assembler les deux guides d'ondes 1, 2, le dispositif d'assemblage est inséré à une extrémité, par exemple l'extrémité 3. L'extrémité 4 du guide d'ondes 2 est approchée de l'extrémité 3 du guide d'ondes 1, et donc du dispositif d'assemblage 10. Puis cette extrémité 4 est insérée dans le fourreau 11 du dispositif d'assemblage 10. L'élément réversiblement déformable 14 destiné à se positionner dans la première gorge 6 de l'extrémité 4, sous la force exercée par l'extrémité 4 lors de son insertion dans le fourreau 11, se rétracte dans la première gorge 13 du fourreau 11 qui lui est associée. Quand l'extrémité 4 est en position, c'est-à-dire en butée contre l'extrémité 3 dans le fourreau 11, l'élément réversiblement déformable 14 se libère dans la gorge 6 de l'extrémité 4 et reprend sa forme initiale. Ainsi, il exerce une pression sur les gorges 6, 13 avec lesquelles il coopère. Il en est de même avec l'élément réversiblement déformable 14 associé aux gorges 5, 13 au niveau de l'extrémité 3 du premier guide d'ondes 1.

Dans un mode de réalisation avantageux, une pression exercée par les éléments réversiblement déformables 14 au niveau des gorges des premier et deuxième guides d'ondes 1, 2 se fait du premier guide d'ondes 1 vers le deuxième guide d'ondes 2 et du deuxième guide d'ondes 2 vers le premier guide d'ondes 1. Cette pression exercée entre les guides d'ondes 1, 2 entre eux permet de garantir l'étanchéité entre les guides d'ondes 1, 2.

L'étanchéité obtenue est mécanique et permet aussi de garantir une bonne isolation EMC.

Ainsi, les gains attendus avec des dispositifs d'assemblage de guides d'ondes selon l'invention sont multiples. Il n'est plus nécessaire d'acheter des vis et rondelles pour le montage. Il en résulte un gain de coût. Le dispositif d'assemblage étant sans vis, un gain de masse est réalisé, de l'ordre de 30%. Enfin, l'invention permet une réduction du temps de montage, une meilleure accessibilité. Il est possible d'avoir une densité de guides d'ondes plus importante. Et l'invention s'applique également à des guides d'ondes existants. L'invention permet aussi d'assurer une pression de contact uniforme sur toute la périphérie des deux guides d'ondes assemblés et d'avoir un système de blindage renforcé avec le fourreau métallique recouvrant la jonction, cette zone étant sensible aux potentielles fuites EMC. L'invention permet d'assurer la qualité de l'assemblage tout en minimisant le nombre de pièces à assembler. Enfin, l'invention permet aussi d'envisager des assemblages à brides multiples.

La figure 3 représente le premier mode de réalisation de l'assemblage 20 selon l'invention avec les deux guides d'ondes 1, 2 assemblés. Dans les exemples représentés, les extrémités 3, 4 des premier et deuxième guides d'ondes 1, 2 sont de section elliptique. Bien que la section elliptique soit préférée, les extrémités 3, 4 peuvent aussi être de section circulaire. Dans le cas d'application à des guides d'ondes, ceux-ci étant de section rectangulaire, la section elliptique des extrémités est préférée afin de générer une pression constante sur le pourtour de l'extrémité par l'élément réversiblement déformable tout en prenant garde à la masse (c'est-à-dire en ajoutant un minimum de matière au niveau des extrémités).

L'invention concerne un assemblage 20 comprenant un premier guide d'ondes 1 et un deuxième guide d'ondes 2 s'étendant longitudinalement selon le premier axe Z, ayant chacun une extrémité 3, 4, comprenant chacune une première gorge annulaire 5, 6, les deux extrémités 3, 4 étant contigües selon le premier axe Z, l'assemblage comprenant au moins un dispositif d'assemblage 10 tel que décrit dans cette demande de brevet.

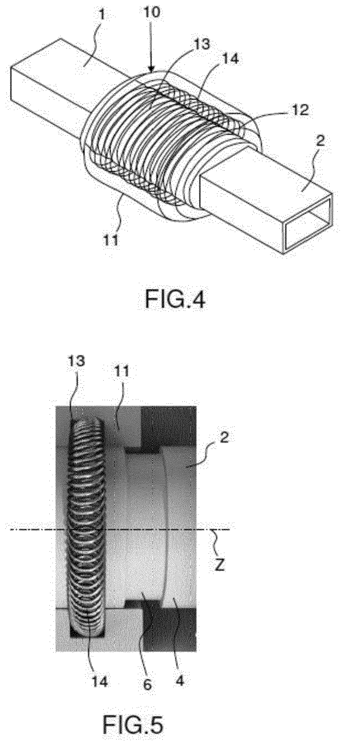

La figure 4 représente l'assemblage 20 selon l'invention. Sur la figure 4, le fourreau 11 du dispositif d'assemblage 10 est représenté en semi-transparence afin de visualiser les gorges 13 dans sa paroi intérieure 12 et les éléments réversiblement déformables 14 positionnés dans les gorges 13 du fourreau 11 et dans les gorges 5, 6 (non visibles) des guides d'ondes 1, 2 assemblés.

La figure 5 représente partiellement le dispositif d'assemblage selon l'invention, avant assemblage des guides d'ondes 1, 2. Sur la figure 5, seul le guide d'ondes 2 est représenté, au moment où il est inséré dans le fourreau 11. Le fourreau 11 comprend la première gorge 13 dans laquelle est positionné l'élément réversiblement déformable 14. L'élément réversiblement déformable 14 est un ressort à spires inclinées. Comme expliqué plus loin, ce mode de réalisation particulièrement avantageux permet, en plus de bloquer la translation selon le premier axe Z des deux guides d'ondes, d'exercer une pression prédéfinie d'un guide d'ondes vers l'autre. Lors de l'insertion de l'extrémité 4 dans le fourreau 11, le ressort à spires inclinées 14 se déforme, il se tasse dans la gorge 13 du fourreau 11 afin de permettre l'insertion de l'extrémité 4.

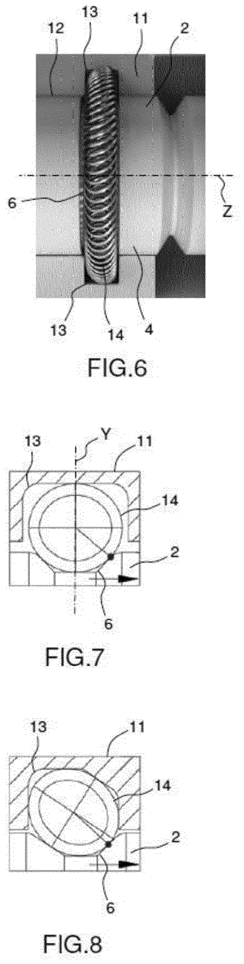

La figure 6 représente partiellement le dispositif d'assemblage selon l'invention, les guides d'ondes 1, 2 assemblés. Cette figure est à considérer dans la continuité de l'insertion du guide d'ondes 2 dans le fourreau 11 précédemment décrit. Sur cette figure, l'extrémité 4 a été insérée un peu plus dans le fourreau 11, jusqu'à ce que la première gorge 6 du guide d'ondes 2 soit en vis-à-vis de la gorge 13 du fourreau 11. Le ressort à spires inclinées 14 peut alors se libérer dans la gorge 6 du guide d'ondes 2. Il est alors positionné à la fois dans la gorge 6 du guide d'ondes et dans la gorge 13 du fourreau 11. Il en résulte la position finale d'assemblage du guide d'ondes 2 dans le fourreau 11. Le guide d'ondes 2 est bloqué en translation selon le premier axe Z. De façon symétrique, le guide d'ondes 1 est également en position finale d'assemblage dans le fourreau 11. Le guide d'ondes 1 est bloqué en translation selon le premier axe Z. Par ailleurs, l'inclinaison des spires du ressort 14 dans la gorge 6 du guide d'ondes 2 génère une force orientée vers le guide d'ondes 1. De même, l'inclinaison des spires du ressort 14 dans la gorge 5 du guide d'ondes 1 génère une force orientée vers le guide d'ondes 2. Les ressorts 14 génèrent une pression d'un guide d'ondes vers l'autre guide d'ondes, ce qui permet d'assurer le niveau d'isolation à respecter entre les deux guides d'ondes assemblés (isolation EMC et joint mécanique).

Dans les exemples de réalisation décrits précédemment, et pour des raisons de facilité de compréhension, seule une gorge par extrémité de guide d'ondes a été considérée, et deux gorges dans le fourreau (une gorge dans le fourreau étant associée à une gorge d'un guide d'ondes). Le même principe s'applique avec plusieurs autres gorges, préférentiellement deux gorges par extrémité de guide d'ondes et donc quatre gorges dans le fourreau, afin de générer un bon niveau de pression entre les guides d'ondes (le nombre d'éléments réversiblement déformables étant avantageusement égal à celui du nombre de gorge dans le fourreau, mais pouvant aussi être inférieur, à condition que le minimum de deux - un élément par guide d'ondes - soit respecté).

Plus généralement, au moins une des deux extrémités 3, 4 peut comprendre en outre au moins une deuxième gorge annulaire 7, 8, et la paroi intérieure 12 du fourreau 11 peut alors comprendre au moins une deuxième gorge annulaire destinée à être en vis-à-vis de la au moins une deuxième gorge annulaire 7, 8 des premier et deuxième guides d'ondes 1, 2, et au moins un deuxième élément réversiblement déformable positionné dans la au moins une deuxième gorge annulaire du fourreau et configuré pour être positionné dans une deuxième gorge annulaire 7, 8 des premier et/ou deuxième guides d'ondes 1, 2.

La figure 7 représente une vue en coupe perpendiculairement à l'axe Z au niveau des gorges 13 du dispositif d'assemblage 10 en conception symétrique selon l'invention, les guides d'ondes 1, 2 assemblés. Soit Y un deuxième axe perpendiculaire au premier axe Z et traversant les gorges 13 et 6. Sur la vue en coupe de la figure 7, la spire du ressort à spires inclinées est circulaire. Les gorges associées 13, 6 du fourreau et du guide d'ondes 2 sont symétriques par rapport au deuxième axe Y. Dans cette configuration symétrique, la force d'insertion à appliquer pour l'assemblage est égale à la force d'extraction à appliquer pour désassembler les guides d'ondes.

La figure 8 représente une vue en coupe perpendiculairement à l'axe Z au niveau des gorges du dispositif d'assemblage en conception asymétrique selon l'invention, les guides d'ondes assemblés. Sur la vue en coupe de la figure 8, la spire du ressort à spires inclinées est elliptique. Les gorges associées 13, 6 du fourreau et du guide d'ondes 2 sont asymétriques par rapport au deuxième axe Y. Dans cette configuration asymétrique, la force d'insertion à appliquer pour l'assemblage est différente de la force d'extraction à appliquer pour désassembler les guides d'ondes. Avantageusement, la force d'extraction est supérieure à la force d'insertion. Selon l'assemblage de guides d'ondes à réaliser, une pression d'un guide d'ondes sur l'autre est préalablement définie. En fonction de cette pression, le ressort à spires inclinées est réalisé avec des paramètres préalablement définis pour répondre au besoin de pression à exercer souhaité : degré d'inclinaison des spires, diamètre des spires, forme et dimensions de la section des spires. Une fois le ressort conçu, les gorges des extrémités des guides d'ondes et du fourreau sont conçues pour recevoir le ressort. Ainsi, selon le type de ressort et de gorges (forme, profondeur), la valeur de la force d'assemblage et désassemblage est paramétrable. La pression entre les deux guides d'ondes est appliquée par le biais des ressorts appliquant leur force par le biais des gorges dimensionnées. Les forces d'insertion et d'extraction peuvent aller jusqu'à 250 N selon le design des gorges et des ressorts.

La mise en oeuvre de ressorts à spires inclinées permet un contrôle des forces appliquées plus stable, et la spécificité du design asymétrique selon la forme de la gorge permet une force d'insertion faible comparée à la force d'extraction, par exemple avec une différence d'un facteur 10.

Le fourreau 11 peut être réalisé en un matériau quelconque pour un usage courant. Dans le cas d'application aux guides d'ondes, le fourreau 11 est métallique, préférentiellement en aluminium. En effet, en utilisation, les guides d'ondes sont soumis à des gradients de températures élevés, par exemple entre -180°C et +180°C. Avec un fourreau 11 en aluminium comme les guides d'ondes, la dilatation des matériaux est mieux maîtrisée.

Les ressorts peuvent être en acier inoxydable avec un traitement de surface de type argenture. Outre la pression de contact uniforme qu'ils assurent au niveau de la périphérie des éléments 1, 2, les ressorts donnent de très bons résultats en EMC. Des ressorts en cuivre peuvent également être utilisés.

Les éléments réversiblement déformables 14 assurent le rôle de blocage en translation des guides d'ondes 1, 2 selon le premier axe Z.

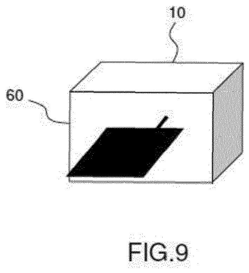

La figure 9 représente un satellite 60 équipé d'au moins un assemblage 20 selon l'invention.

## Revendications

1. Assemblage (20) comprenant un premier guide d'ondes creux (1) et un deuxième guide d'ondes creux (2) s'étendant longitudinalement selon un premier axe (Z), ayant chacun une extrémité (3, 4), les deux extrémités (3, 4) étant contigües selon le premier axe (Z), et un dispositif d'assemblage (10) du premier guide d'ondes (1) et du deuxième guide d'ondes (2), le dispositif d'assemblage (10) comprenant :
- une première gorge annulaire (5) sur le premier guide d'ondes creux (1) et une première gorge annulaire (6) sur le deuxième guide d'ondes creux (2),
- un fourreau (11) entourant les extrémités (3, 4) des premier et deuxième guides d'ondes creux (1, 2), le fourreau (11) ayant une paroi intérieure (12) comprenant deux premières gorges (13) annulaires en vis-à-vis des premières gorges annulaires (5, 6) des premier et deuxième guides d'ondes creux (1, 2),
- deux éléments réversiblement déformables (14), un premier parmi les deux éléments réversiblement déformables (14) étant positionné dans une première parmi les deux premières gorges (13) annulaires du fourreau (11) et positionné dans la première gorge annulaire (5) sur le premier guide d'ondes creux (1) et un deuxième parmi les deux éléments réversiblement déformables (14) étant positionné dans une deuxième parmi les deux premières gorges (13) annulaires du fourreau (11) et positionné dans la première gorge annulaire (6) sur le deuxième guide d'ondes creux (2), de sorte à bloquer en translation selon le premier axe (Z) les premier et deuxième guides d'ondes creux (1,2).

2. Assemblage (20) selon la revendication 1, **caractérisé en ce que** les extrémités (3, 4) des premier et deuxième guides d'ondes creux (1, 2) sont de section elliptique.

3. Assemblage (20) selon la revendication 1 ou 2, **caractérisé en ce que** les extrémités (3, 4) des premier et deuxième guides d'ondes creux (1, 2) sont de section circulaire.

4. Assemblage (20) selon l'une quelconque des revendications 2 ou 3, **caractérisé en ce que** le au moins un élément réversiblement déformable (14) est un ressort à spires inclinées, de sorte à exercer une pression prédéfinie entre les premier et deuxième guides d'ondes creux (1, 2) entre eux.

5. Assemblage (20) selon l'une quelconque des revendications précédentes, au moins une des deux extrémités (3, 4) comprenant en outre au moins une deuxième gorge annulaire (7, 8), **caractérisé en ce que** la paroi intérieure (12) du fourreau (11) comprend au moins une deuxième gorge annulaire en vis-à-vis de la au moins une deuxième gorge annulaire (7, 8) des au moins une des deux extrémités (3, 4), et au moins un deuxième élément réversiblement déformable positionné dans la au moins une deuxième gorge annulaire du fourreau (11) et positionné dans la au moins une deuxième gorge annulaire (7, 8) des au moins une des deux extrémités (3, 4).

6. Satellite (60) comprenant au moins un assemblage (20) selon l'une quelconque des revendications précédentes.

## Patentansprüche

1. Anordnung (20), umfassend einen ersten Hohlwellenleiter (1) und einen zweiten Hohlwellenleiter (2), die sich in Längsrichtung entlang einer ersten Achse (Z) erstrecken und jeweils ein Ende (3, 4) aufweisen, wobei die beiden Enden (3, 4) entlang der ersten Achse (Z) aneinandergrenzen, und eine Vorrichtung zum Zusammenbau (10) des ersten Wellenleiters (1) und des zweiten Wellenleiters (2),
wobei die Vorrichtung zum Zusammenbau (10) Folgendes umfasst:
- eine erste ringförmige Nut (5) auf dem ersten Hohlwellenleiter (1) und eine erste ringförmige Nut (6) an dem zweiten Hohlwellenleiter (2),
- eine Hülse (11), welche die Enden (3, 4) des ersten und zweiten Hohlwellenleiters (1, 2) umgibt, wobei die Hülse (11) eine Innenwand (12) aufweist, die zwei erste ringförmige Nuten (13) umfasst, die den ersten ringförmigen Nuten (5, 6) des ersten und des zweiten Hohlwellenleiters (1, 2) zugewandt sind,
- zwei reversibel verformbare Elemente (14), wobei ein erstes der beiden reversibel verformbaren Elemente (14) in einer ersten der beiden ersten Ringnuten (13) der Hülse (11) positioniert ist und in der ersten Ringnut (5) an dem ersten Hohlwellenleiter (1) positioniert ist, und ein zweites der beiden reversibel verformbaren Elemente (14) in einer zweiten der beiden ersten Ringnuten (13) der Hülse (11) positioniert ist und in der ersten Ringnut (6) an dem zweiten Hohlwellenleiter (2) positioniert ist, so dass der erste und der zweite Hohlwellenleiter (1, 2) gegen Verschiebung entlang der ersten Achse (Z) blockiert werden.

2. Anordnung (20) nach Anspruch 1, **dadurch gekennzeichnet, dass** die Enden (3, 4) des ersten und des zweiten Hohlwellenleiters (1, 2) einen elliptischen Querschnitt aufweisen.

3. Anordnung (20) nach Anspruch 1 oder 2, **dadurch gekennzeichnet, dass** die Enden (3, 4) des ersten und des zweiten Hohlwellenleiters (1, 2) einen kreisförmigen Querschnitt aufweisen.

4. Anordnung (20) nach einem der Ansprüche 2 oder 3, **dadurch gekennzeichnet, dass** das mindestens eine reversibel verformbare Element (14) eine Feder mit schrägen Windungen ist, so dass ein vordefinierter Druck zwischen dem ersten und dem zweiten Hohlwellenleiter (1, 2) untereinander ausgeübt wird.

5. Anordnung (20) nach einem der vorhergehenden Ansprüche, wobei mindestens eines der beiden Enden (3, 4) zusätzlich mindestens eine zweite Ringnut (7, 8) umfasst, **dadurch gekennzeichnet, dass** die Innenwand (12) der Hülse (11) mindestens eine zweite Ringnut umfasst, die gegenüber der mindestens einen zweiten Ringnut (7, 8) der mindestens einen der beiden Enden (3, 4) angeordnet ist, und mindestens ein zweites reversibel verformbares Element, das in der mindestens einen zweiten Ringnut der Hülse (11) positioniert ist und in der mindestens einen zweiten Ringnut (7, 8) der mindestens einen der beiden Enden (3, 4) positioniert ist.

6. Satellit (60), umfassend mindestens eine Anordnung (20) nach einem der vorhergehenden Ansprüche.

## Claims

1. Assembly (20) comprising a first hollow waveguide (1) and a second hollow waveguide (2) extending longitudinally along a first axis (Z), each having an end (3, 4), the two ends (3, 4) being contiguous along the first axis (Z), and an assembly device (10) for assembling the first waveguide (1) and the second waveguide (2),
the assembly device (10) comprising:
- a first annular groove (5) on the first hollow waveguide (1) and a first annular groove (6) on the second hollow waveguide (2),
- a sleeve (11) surrounding the ends (3, 4) of the first and second hollow waveguides (1, 2), the sleeve (11) having an inner wall (12) comprising two first annular grooves (13) facing the first annular grooves (5, 6) of the first and second hollow waveguides (1, 2),
- two reversibly deformable elements (14), a first one of the two reversibly deformable elements (14) being positioned in a first of the two first annular grooves (13) of the sleeve (11) and positioned in the first annular groove (5) on the first hollow waveguide (1), and a second one of the two reversibly deformable elements (14) being positioned in a second of the two first annular grooves (13) of the sleeve (11) and positioned in the first annular groove (6) on the second hollow waveguide (2), so as to block the first and second hollow waveguides (1, 2) in terms of translation along the first axis (Z).

2. Assembly (20) according to claim 1, **characterized in that** the ends (3, 4) of the first and second hollow waveguides (1, 2) are of elliptical section.

3. Assembly (20) according to claim 1 or 2, **characterized in that** the ends (3, 4) of the first and second hollow waveguides (1, 2) are of circular section.

4. Assembly (20) according to any one of claims 2 or 3, **characterized in that** the at least one reversibly deformable element (14) is a canted coil spring, so as to exert a predefined pressure between the first and second hollow waveguides (1, 2) the one on the other.

5. Assembly (20) according to any one of the preceding claims, at least one of the two ends (3, 4) further comprising at least one second annular groove (7, 8), **characterized in that** the inner wall (12) of the sleeve (11) comprises at least one second annular groove facing the at least one second annular groove (7, 8) of the at least one of the two ends (3, 4), and at least one second reversibly deformable element positioned in the at least one second annular groove of the sleeve (11) and positioned in the at least one second annular groove (7, 8) of the at least one of the two ends (3, 4).

6. Satellite (60) comprising at least one assembly (20) according to any one of the preceding claims.
